(19) Europäisches Patentamt / European Patent Office / Office européen des brevets

(11) **EP 4 404 518 A1**

(12) **EUROPEAN PATENT APPLICATION**
published in accordance with Art. 153(4) EPC

(43) Date of publication:
**24.07.2024 Bulletin 2024/30**

(21) Application number: **22874713.5**

(22) Date of filing: **20.09.2022**

(51) International Patent Classification (IPC):
**H04L 27/26** $^{(2006.01)}$

(52) Cooperative Patent Classification (CPC):
**H04L 27/26; H04W 56/00**

(86) International application number:
**PCT/CN2022/120017**

(87) International publication number:
**WO 2023/051326 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021 CN 202111148984**

(71) Applicant: **Huawei Technologies Co., Ltd.
Shenzhen, Guangdong 518129 (CN)**

(72) Inventors:
• **WU, Zhao
Shenzhen, Guangdong 518129 (CN)**
• **ZHOU, Han
Shenzhen, Guangdong 518129 (CN)**
• **TIE, Xiaolei
Shenzhen, Guangdong 518129 (CN)**
• **HUA, Meng
Shenzhen, Guangdong 518129 (CN)**

(74) Representative: **Grünecker Patent- und
Rechtsanwälte
PartG mbB
Leopoldstraße 4
80802 München (DE)**

(54) **TIME-FREQUENCY SYNCHRONIZATION METHOD, AND APPARATUS AND STORAGE MEDIUM**

(57) This application provides a time-frequency synchronization method, an apparatus, and a storage medium. The method includes: A terminal device receives a plurality of reference signals from a network device based on n reference signal resource sets, where there is an association relationship between the n reference signal resource sets, and n is an integer greater than 1; and the terminal device performs time-frequency synchronization on a downlink channel based on the plurality of reference signals. In this way, time-domain density or frequency-domain density of a reference signal received by the terminal device in one time-frequency synchronization period is higher, thereby increasing a time-frequency offset correction range of the reference signal.

FIG. 3

## Description

This application claims priority to Chinese Patent Application No. 202111148984.4, filed with the China National Intellectual Property Administration on September 29, 2021, and entitled "TIME-FREQUENCY SYNCHRONIZATION METHOD, APPARATUS, AND STORAGE MEDIUM", which is incorporated herein by reference in its entirety.

## TECHNICAL FIELD

This application relates to the communication technology field, and in particular, to a time-frequency synchronization method, an apparatus, and a storage medium.

## BACKGROUND

At present, in some communication systems, such as a 5th generation wireless system (5th generation wireless system, 5G), a reference signal (for example, a tracking reference signal (tracking reference signal, TRS)) is often used to perform time-frequency synchronization, to correct a time-frequency offset between a terminal device and a network device. However, when the terminal device moves at a high speed relative to the network device, the time-frequency offset between the terminal device and the network device is large and exceeds a time-frequency offset correction range of the reference signal. Therefore, how to expand the time-frequency offset correction range of the reference signal to correct a larger time-frequency offset is an urgent problem to be resolved currently.

## SUMMARY

Embodiments of this application provide a time-frequency synchronization method, an apparatus, and a storage medium, to correct a larger time-frequency offset.

According to a first aspect, this application provides a time-frequency synchronization method, including: A terminal device receives a plurality of reference signals from a network device based on n reference signal resource sets, where there is an association relationship between the n reference signal resource sets, and n is an integer greater than 1; and the terminal device performs time-frequency synchronization on a downlink channel based on the plurality of reference signals.

According to the time-frequency synchronization method provided in the first aspect, the terminal device may perform time-frequency synchronization on the downlink channel based on the plurality of reference signals received from the n reference signal resource sets. In this way, time-domain density or frequency-domain density of a reference signal received by the terminal device in a time-frequency synchronization period is higher, thereby increasing a time-frequency offset correction range of the reference signal.

In a possible implementation, the n reference signal resource sets are in a same time unit, and reference signal resources in different reference signal resource sets are in different symbols in the time unit.

According to the time-frequency synchronization method provided in this implementation, time-domain density of a reference signal resource is increased, a quantity of interval symbols in a sending period of the reference signal is reduced, and the time-frequency offset correction range between the terminal device and the network device of the reference signal is expanded.

In a possible implementation, the plurality of reference signals come from a same antenna port of the network device.

According to the time-frequency synchronization method provided in this implementation, the plurality of reference signals are sent through a same channel, and the terminal device performs time-frequency synchronization based on the plurality of reference signals, thereby improving accuracy of time-frequency synchronization.

In a possible implementation, the method further includes: The terminal device receives n pieces of configuration information from the network device. The n pieces of configuration information are respectively used to configure the n reference signal resource sets, first configuration information in the n pieces of configuration information includes association indication information, and the association indication information indicates n-1 reference signal resource sets that have an association relationship with a first reference signal resource set. The first reference signal resource set is a reference signal resource set configured by using the first configuration information.

According to the time-frequency synchronization method provided in this implementation, the network device separately configures the n reference signal resource sets by using the n pieces of configuration information, and indicates the association relationship between the n reference signal resource sets by using at least one piece of first configuration information in the n pieces of configuration information, so that the terminal device can accurately receive the plurality of reference signals transmitted on the n reference signal resource sets that have the association relationship.

In a possible implementation, the method further includes: The terminal device receives second configuration information from the network device. The second configuration information is used to configure the n reference signal resource sets.

According to the time-frequency synchronization method provided in this implementation, the network device may configure the n reference signal resource sets by using one piece of configuration information, thereby reducing signaling overheads.

In a possible implementation, reference signal resources in different reference signal resource sets have a same frequency domain location in the time unit.

According to the time-frequency synchronization method provided in this implementation, compared with a case in which reference signal resources in different reference signal resource sets have different frequency domain locations in the time unit, processing complexity of the terminal device is reduced.

In a possible implementation, reference signal resources in different reference signal resource sets have different frequency domain locations in the time unit.

According to the time-frequency synchronization method provided in this implementation, time-domain density and frequency-domain density of the n reference signal resources are both higher than time-domain density and frequency-domain density of one reference signal resource, so that better time-frequency offset correction effect can be obtained.

In a possible implementation, that the terminal device performs time-frequency synchronization on a downlink channel based on the plurality of reference signals includes: The terminal device interpolates the plurality of reference signals; and the terminal device performs time-frequency synchronization on the downlink channel based on a plurality of interpolated reference signals.

According to the time-frequency synchronization method provided in this implementation, that the terminal device performs time-frequency synchronization on the downlink channel based on a plurality of interpolated reference signals has better time-frequency offset correction effect.

According to a second aspect, this application provides a time-frequency synchronization method, including: A network device sends a plurality of reference signals to a terminal device based on n reference signal resource sets. There is an association relationship between the n reference signal resource sets, and n is an integer greater than 1.

In a possible implementation, the n reference signal resource sets are in a same time unit, and reference signal resources in different reference signal resource sets are in different symbols in the time unit.

In a possible implementation, the plurality of reference signals come from a same antenna port of the network device.

In a possible implementation, the method further includes: The network device sends n pieces of configuration information to the terminal device. The n pieces of configuration information are respectively used to configure the n reference signal resource sets, first configuration information in the n pieces of configuration information includes association indication information, and the association indication information indicates n-1 reference signal resource sets that have an association relationship with a first reference signal resource set. The first reference signal resource set is a reference signal resource set configured by using the first configuration information.

In a possible implementation, the method further includes: The network device sends second configuration information to the terminal device. The second configuration information is used to configure the n reference signal resource sets.

In a possible implementation, reference signal resources in different reference signal resource sets have a same frequency domain location in the time unit.

In a possible implementation, reference signal resources in different reference signal resource sets have different frequency domain locations in the time unit.

For beneficial effect of the time-frequency synchronization method provided in the second aspect and each possible implementation of the second aspect, refer to beneficial effect brought by the first aspect and each possible implementation of the first aspect. Details are not described herein again.

According to a third aspect, this application provides a communication apparatus, including: a transceiver unit, configured to receive a plurality of reference signals from a network device based on n reference signal resource sets, where there is an association relationship between the n reference signal resource sets, and n is an integer greater than 1; and a processing unit, configured to perform time-frequency synchronization on a downlink channel based on the plurality of reference signals.

In a possible implementation, the n reference signal resource sets are in a same time unit, and reference signal resources in different reference signal resource sets are in different symbols in the time unit.

In a possible implementation, the plurality of reference signals come from a same antenna port of the network device.

In a possible implementation, the transceiver unit is further configured to receive n pieces of configuration information from the network device. The n pieces of configuration information are respectively used to configure the n reference signal resource sets, first configuration information in the n pieces of configuration information includes association indication information, and the association indication information indicates n-1 reference signal resource sets that have an association relationship with a first reference signal resource set. The first reference signal resource set is a reference signal resource set configured by using the first configuration information.

In a possible implementation, the transceiver unit is further configured to receive second configuration information from the network device. The second configuration information is used to configure the n reference signal resource sets.

In a possible implementation, reference signal resources in different reference signal resource sets have a same frequency domain location in the time unit.

In a possible implementation, reference signal resources in different reference signal resource sets have different frequency domain locations in the time unit.

In a possible implementation, the processing unit is specifically configured to: interpolate the plurality of reference signals; and perform time-frequency synchronization on the downlink channel based on a plurality of interpolated reference signals.

According to a fourth aspect, this application provides a communication apparatus, including: a processing unit, configured to determine n reference signal resource sets, where there is an association relationship between the n reference signal resource sets, and n is an integer greater than 1; and a transceiver unit, configured to send a plurality of reference signals to a terminal device based on the n reference signal resource sets.

In a possible implementation, the n reference signal resource sets are in a same time unit, and reference signal resources in different reference signal resource sets are in different symbols in the time unit.

In a possible implementation, the plurality of reference signals come from a same antenna port of the network device.

In a possible implementation, the transceiver unit is further configured to send n pieces of configuration information to the terminal device. The n pieces of configuration information are respectively used to configure the n reference signal resource sets, first configuration information in the n pieces of configuration information includes association indication information, and the association indication information indicates n-1 reference signal resource sets that have an association relationship with a first reference signal resource set. The first reference signal resource set is a reference signal resource set configured by using the first configuration information.

In a possible implementation, the transceiver unit is further configured to send second configuration information to the terminal device. The second configuration information is used to configure the n reference signal resource sets.

In a possible implementation, reference signal resources in different reference signal resource sets have a same frequency domain location in the time unit.

In a possible implementation, reference signal resources in different reference signal resource sets have different frequency domain locations in the time unit.

According to a fifth aspect, an embodiment of this application provides a communication apparatus, including a processor and a memory. The memory is configured to store a computer program, and the processor is configured to invoke and run the computer program stored in the memory, to perform the method in the first aspect, the second aspect, or the possible implementations.

According to a sixth aspect, an embodiment of this application provides a chip, including a processor, configured to invoke computer instructions from a memory and run the computer instructions, so that a device on which the chip is installed performs the method in the first aspect, the second aspect, or the possible implementations.

According to a seventh aspect, an embodiment of this application provides a computer-readable storage medium, configured to store computer program instructions. The computer program enables a computer to perform the method in the first aspect, the second aspect, or the possible implementations.

According to an eighth aspect, an embodiment of this application provides a computer program product, including computer program instructions. The computer program instructions enable a computer to perform the method in the first aspect, the second aspect, or the possible implementations.

According to a ninth aspect, an embodiment of this application provides a terminal, including the communication apparatus in the third aspect or the possible implementations of the third aspect.

**BRIEF DESCRIPTION OF DRAWINGS**

FIG. 1 is a schematic diagram of an architecture of a mobile communication system to which an embodiment of this application is applied;
FIG. 2 is a schematic diagram of a channel state information reference signal resource pattern according to this application;
FIG. 3 is a schematic flowchart of a time-frequency synchronization method 200 according to an embodiment of this application;

FIG. 4a is a schematic diagram of a reference signal pattern according to an embodiment of this application;

FIG. 4b is a schematic diagram of another reference signal pattern according to an embodiment of this application;

FIG. 4c is a schematic diagram of still another reference signal pattern according to an embodiment of this application;

FIG. 5 is a schematic diagram of yet another reference signal pattern according to an embodiment of this application;

FIG. 6 is a schematic flowchart of a time-frequency synchronization method 300 according to an embodiment of this application;

FIG. 7 is a schematic diagram of a structure of a communication apparatus 400 according to an embodiment of this application; and

FIG. 8 is another schematic block diagram of a communication apparatus 500 according to an embodiment of this application.

## DESCRIPTION OF EMBODIMENTS

The following describes technical solutions of this application with reference to accompanying drawings.

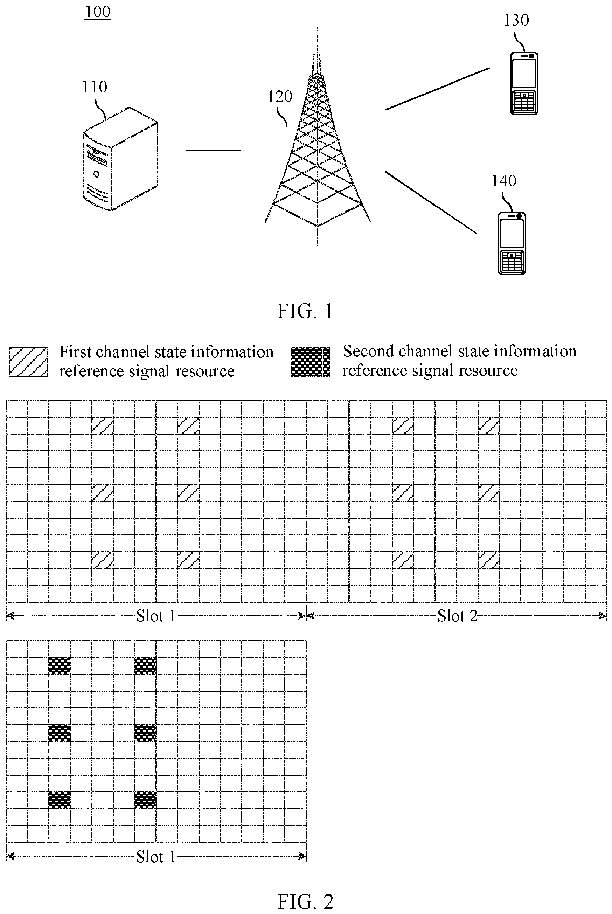

FIG. 1 is a schematic diagram of an architecture of a mobile communication system to which an embodiment of this application is applied. As shown in FIG. 1, the mobile communication system includes a core network device 110, a network device 120, and at least one terminal device (a terminal device 130 and a terminal device 140 shown in FIG. 1). The terminal devices are connected to the network device in a wireless manner, and the network device is connected to the core network device in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. The terminal devices may be located at fixed positions, or may be mobile. FIG. 1 is only a schematic diagram. The communication system may further include another network device, for example, may further include a wireless relay device and a wireless backhaul device, which are not shown in FIG. 1. Quantities of core network devices, network devices, and terminal devices included in the mobile communication system are not limited in embodiments of this application.

The network device is an access device that is used by the terminal devices to wirelessly connect to the mobile communication system. The network device may be a base station NodeB, an evolved base station eNodeB, a base station in an NR mobile communication system, a base station in a future mobile communication system, an access node in a Wi-Fi system, or the like. A specific technology and a specific device form used by the network device are not limited in embodiments of this application.

The terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless receiving and sending function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of this application.

Communication between the network device and the terminal device and communication between terminal devices may be performed by using a licensed spectrum (licensed spectrum), an unlicensed spectrum (unlicensed spectrum), or both the licensed spectrum and the unlicensed spectrum. The network device and the terminal device may communicate with each other by using a spectrum below 6G, may communicate with each other by using a spectrum above 6G, or may communicate with each other by using both the spectrum below 6G and the spectrum above 6G. A spectrum resource used between the network device and the terminal device is not limited in embodiments of this application.

It should be understood that specific forms of the network device and the terminal device are not limited in this application.

In an NR system, information transmission in both a low frequency (for example, a frequency range 1 (frequency range 1, FR1)) and a high frequency (for example, a frequency range 2 (frequency range 2, FR2)) are supported, and the NR system further supports communication with a device in a high speed train (high speed train, HST).

In a process in which the terminal device communicates with the network device, there is an offset (the offset is also referred to as time-frequency offset below) between locally maintained time and/or frequency domain of the terminal device and time and/or frequency of the network device. Stability of communication between the terminal device and the network device is greatly affected, and even a network connection between the terminal device and the network device is interrupted.

The time-frequency offset between the terminal device and the network device may be generated for the following two reasons:

1. Precision of a frequency generator (for example, a crystal oscillator) used by the terminal device is not high, and/or an environmental factor such as a working temperature changes. As a result, after the terminal device is started and runs for a period of time, an offset occurs between a time and a working frequency that are locally maintained and a time and a frequency of the network device.

2. When the terminal device moves in an NR network, a frequency offset occurs between the terminal device and the network device due to Doppler effect.

For example, in an HST communication process, strong Doppler effect is formed between a train running at a high speed (for example, a speed greater than 250 km/h) and base stations on two sides of a rail. As a result, a downlink received signal and an uplink sent signal of UE in the train are offset by a fixed frequency. Therefore, Doppler shift between the UE and a gNB needs to be corrected before data and/or signaling communication.

A device in the HST generally includes a common mobile terminal, for example, a mobile phone, and further includes a customer premises equipment (customer premises equipment, CPE). Compared with the common mobile terminal, the CPE usually has stronger baseband and radio frequency processing capabilities. Relay communication may be performed between the gNB and the common mobile terminal. For example, the CPE may perform 5G communication with the gNB, and simultaneously perform Wi-Fi communication with the common mobile terminal, so as to implement reliable communication between the gNB and the common mobile terminal.

The terminal device may compensate for a time-frequency offset of the terminal device through time-frequency tracking (time-frequency tracking), or referred to as time-frequency synchronization. For example, in an idle (IDLE) state, the UE generally performs preliminary time-frequency tracking by receiving a synchronization signal block (synchronization signal block, SSB) sent by a base station. In a connected state, the UE usually performs time-frequency tracking by using a TRS. A main purpose is to estimate a timing offset, a frequency domain offset, a delay spread, and a Doppler spread between the UE and the base station based on a specific reference signal sent by the base station, and compensate for a time-frequency offset of the UE.

The TRS may be, for example, a special channel state information reference signal (channel state information reference signal, CSI-RS), or the TRS may be an independent reference signal. When the TRS is a type of CSI-RS, a TRS transmission resource may be configured by configuring a channel state information reference signal resource set (CSI-RS resource set). The channel state information reference signal resource set (in other words, a TRS resource set) may be, for example, a non-zero power channel state information reference signal resource set (NZP CSI-RS resource set), and each CSI-RS resource set includes two or four TRS resources. Each TRS resource represents a resource element (Resource Element, RE) sent on one symbol at specific frequency-domain density and bandwidth. TRS resources have different symbol locations, but the TRS resources have same bandwidth, density, and frequency domain location. Refer to FIG. 2. A channel state information reference signal resource in a first channel state information reference signal resource set occupies a fourth symbol and an eighth symbol in both a slot 1 and a slot 2, and a second channel state information reference signal resource set occupies a third symbol and a seventh symbol in the slot 1.

The TRS may be sent periodically or aperiodically. During periodic sending, each CSI-RS resource set (occupying two or four symbols) represents a TRS burst (burst) in a sending period. Generally, there is one TRS burst in one period. During aperiodic sending, the network device indicates transmission of the TRS by using downlink control information (downlink control information, DCI).

Each TRS transmission resource set corresponds to one SSB. For example, each TRS transmission resource set is in a quasi co-location type C (quasi co-location type C, QCL-type C) relationship with one SSB. The terminal device may perform coarse time-frequency synchronization based on the SSB, and receive the TRS by using a channel parameter provided by the coarse time-frequency synchronization. TRS channel information is obtained. A channel on which the terminal device receives signaling and/or data in the connected state is synchronized with the TRS according to a QCL-Type A, so that fine time-frequency synchronization information can be provided for the channel. QCL and various modes of the QCL are specifically described below.

It should be noted that a correctable time-frequency offset range of the TRS is limited, and the correctable range is related to a quantity of frequency domain spacing subcarriers and a quantity of time domain spacing symbols between TRS transmission resources in the TRS transmission resource set. For example, a smaller quantity of time domain spacing symbols indicates a larger correctable frequency domain range of the TRS, and a smaller quantity of frequency domain spacing subcarriers indicates a larger correctable time domain range of the TRS.

$$F = \pm \frac{SCS}{2D}$$

For example, a correctable frequency offset range F of the TRS satisfies , where SCS is a subcarrier spacing of a TRS carrier frequency, D is a quantity of symbols spaced between two symbols in the TRS transmission resource set in time domain. With reference to FIG. 2, D=4. For a cell with a subcarrier spacing of 15 kHz in the FR1, the correctable frequency offset range F of the TRS is $\pm$ 1750 Hz. For a cell with a subcarrier spacing of 120 kHz in the FR2, the correctable frequency offset range of the TRS is $\pm$ 15000 Hz.

In an FR2 scenario of 30 GHz carrier frequency and 120 kHz subcarrier, it is assumed that a speed of an HST is 250 km/h, and a Doppler frequency of the HST is 7 kHz. At handover points of different transmission reception points (Transmission Reception Points, TRPs)/gNBs, an accumulated Doppler frequency is 14000 Hz, which is close to a correctable frequency offset limit of the existing TRS transmission resource set. When the speed of the HST is higher than 250 km/h, the existing TRS transmission resource set cannot meet a requirement of correcting the Doppler shift. Therefore, in a scenario in which the terminal device moves at a high speed, how to increase a time-frequency offset correction range to implement time-frequency synchronization between the terminal device and the network device is an urgent problem to be resolved currently.

In this embodiment of this application, for a problem that fine time-frequency synchronization cannot be implemented because high-speed movement of the terminal device exceeds the time-frequency offset correction range of the TRS, in a time-frequency synchronization process performed by the terminal device, at least two reference signal resource sets (for example, TRS transmission resource sets) are introduced, and reference signals carried in the at least two reference signal resource sets are received in one time-frequency synchronization period of the terminal device. A quantity of time domain spacing symbols and/or a quantity of frequency domain spacing subcarriers between reference signal resources are/is reduced, thereby increasing the time-frequency offset correction range.

To facilitate understanding of embodiments of this application, the following first briefly describes terms used in this application.

1. An antenna port is a logical concept in a communication system. One antenna port may correspond to one actual physical antenna, or may be a combination of a plurality of physical antennas or antenna arrays. When transmit antenna ports of two signals or channels are the same, it may be considered that the two signals or channels pass through a same channel in a same time period. Therefore, a receive end device may perform joint channel estimation on the two signals or channels, to enhance channel estimation performance, or apply a channel estimation result of one signal or channel to the other channel, to reduce receiving complexity.

2. A beam is a space communication resource. The network device or the terminal device may form a transmit beam in an analog, digital, or hybrid manner by using an antenna array. Different beams are generally considered as resources of different spaces. Therefore, same information may be sent by using different beams to cover a plurality of different spatial areas, or different information may be sent to maximize a spatial resource. Beams may be classified into a transmit beam and a receive beam of the network device and a transmit beam and a receive beam of the terminal device.

3. QCL means that some channel characteristics on two antenna ports are the same. When receiving a channel or a signal (set as a channel A) sent by the network device, the terminal device needs to perform channel estimation on the channel A. It is assumed that the channel A and a channel B are in a QCL relationship, some channel characteristics of the channel A and the channel B are the same. If the terminal device has received the channel B before receiving the channel A, the terminal device may directly use these channel characteristic parameters of the channel B for channel estimation of the channel A. In this way, a channel estimation procedure is simplified and a channel estimation speed is improved. The channel B pre-estimated by the terminal device may be referred to as a QCL source (source), and the channel A depends on QCL information of the channel B. Therefore, the channel A may be referred to as a QCL target (target).

Channel characteristic parameter indicated by the QCL may include the following content:

a parameter for providing Doppler estimation of a channel: a Doppler shift (doppler shift) and a Doppler spread (doppler spread), where the Doppler shift is used to represent a frequency shift of a main path of the channel;
a parameter used to provide fine time synchronization of a channel: an average delay (Average delay) and a delay spread (Delay spread), where the average delay is used to represent a delay of a main path of the channel; and
a spatial receive parameter (Spatial Rx parameter), indicating that two channels may be received by a same receive beam.

NR defines four QCL relationship types for two channels, which are represented as QCL-Type A, Type B, Type C, and Type D. The four types include:

the QCL-Type A: Doppler Shift, Doppler Spread, Average delay, Delay spread;
the QCL-Type B: Doppler Shift, Doppler Spread;
the QCL-Type C: Average delay, Doppler Shift; and
the QCL-Type D: Spatial Rx parameter.

In the QCL-Type B, a QCL source channel may provide a Doppler estimation parameter for a QCL target channel, so as to perform Doppler estimation of the QCL target.

In the QCL-Type C, the QCL source channel may provide a Doppler shift and an average delay of the main path for the QCL target channel. However, because QCL-Type C does not include Doppler Spread and Delay Spread, the Doppler shift and delay of all paths in the QCL source channel cannot be used for the QCL target. Therefore, when the channel B and the channel A are the QCL-Type C, QCL channel characteristics of the channel B can only provide coarse time-frequency synchronization for the channel A.

The QCL-Type A includes Doppler Shift, Doppler Spread, Average delay, and Delay Spread, and is a most restrictive QCL relationship. When the two channels are in a QCL-Type A relationship, the two channels are also in a QCL-Type B relationship and a QCL-Type C relationship. The QCL-Type A indicates that the QCL source channel can provide fine time-frequency synchronization for the QCL target channel.

In the QCL-Type D, two channels may be received by a same receive beam, and the QCL-Type D is mainly used for FR2 beam selection and beam indication.

In the NR system, a QCL source channel of a QCL target channel and a corresponding QCL type may be configured by using higher layer signaling, for example, a transmission configuration indicator (Transmission Configuration Indicator, TCI), to indicate the QCL source and the corresponding QCL type.

For example, the TCI may indicate two types of QCL information of each channel. One type of QCL information is mandatory, for example, may indicate one of the QCL-Type A, the QCL-Type B, and the QCL-Type C. The other type of QCL information is optional, and generally indicates whether two channels (including the QCL target channel and the QCL source channel) can be received by a same beam in an FR2 high frequency scenario, and the QCL information indicates the QCL-Type D.

The TCI may further indicate at least one of the following:

a cell where a QCL target channel or signal is located;
a bandwidth part (bandwidth part, BWP) in which the QCL target channel or signal is located; and
that the QCL source channel or signal is a CSI-RS, SSB, or TRS.

In this embodiment of this application, a QCL relationship between the SSB and the TRS may be the QCL-Type C. In other words, the terminal device may perform coarse time-frequency synchronization on the TRS based on the SSB. A relationship between the TRS and to-be-received downlink information, for example, a physical downlink control channel (physical downlink control channel, PDCCH) and/or a physical downlink shared channel (physical downlink shared channel, PDSCH) may be the QCL-Type A. In other words, the terminal device may perform fine time-frequency synchronization on the to-be-received downlink information based on the TRS.

For ease of understanding of embodiments of this application, the following descriptions are provided.

First, channels such as a PDSCH and a PDCCH in embodiments of this application may be understood as physical resources that carry a signal, or may be understood as a signal transmitted by using these resources. For example, that the terminal device receives a signal by using the PDSCH may also be described as that the terminal device receives the PDSCH. A person skilled in the art can understand the meaning.

Second, the terms "first", "second", and various numbers in the following embodiments are merely used for differentiation for ease of description, and are not used to limit the scope of embodiments of this application. For example, different configuration information and reference signal resource sets are distinguished.

Third, "predefinition" may be implemented by pre-storing corresponding code or a corresponding table in a device (for example, including a terminal device and a network device), or may be implemented in another manner that may indicate related information. A specific implementation thereof is not limited in this application.

"Pre-configuration" may be implemented by pre-storing, in a device (for example, including a terminal device and a network device), corresponding code or a corresponding table, or in another manner that may indicate related information, or may be pre-configured by using signaling. For example, the network device pre-configures by using signaling. A specific implementation is not limited in this application.

Fourth, a "protocol" in embodiments of this application may be a standard protocol in the communication field, for example, may include an LTE protocol, an NR protocol, and a related protocol applied to a future communication system. This is not limited in this application.

Fifth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation, and do not mean any other limitation.

The following describes a time-frequency synchronization method provided in embodiments of this application with reference to accompanying drawings.

It should be understood that, for ease of understanding and description, interaction between the terminal device and the network device is mainly used as an example to describe the method provided in embodiments of this application. The terminal device may be, for example, any terminal device in the communication system shown in FIG. 1, such as the terminal device 130 or the terminal device 140. The network device may be the network device 120 in the communication system shown in FIG. 1.

However, it should be understood that this should not constitute any limitation on an execution body of the method provided in this application. As long as the method provided in embodiments of this application can be performed by using a program that runs the code of the method provided in embodiments of this application, the method provided in embodiments of this application may be performed by using the program. For example, the terminal device shown in the following embodiment may alternatively be replaced with a component in the terminal device, for example, a chip, a chip system, or another functional module that can invoke and execute a program.

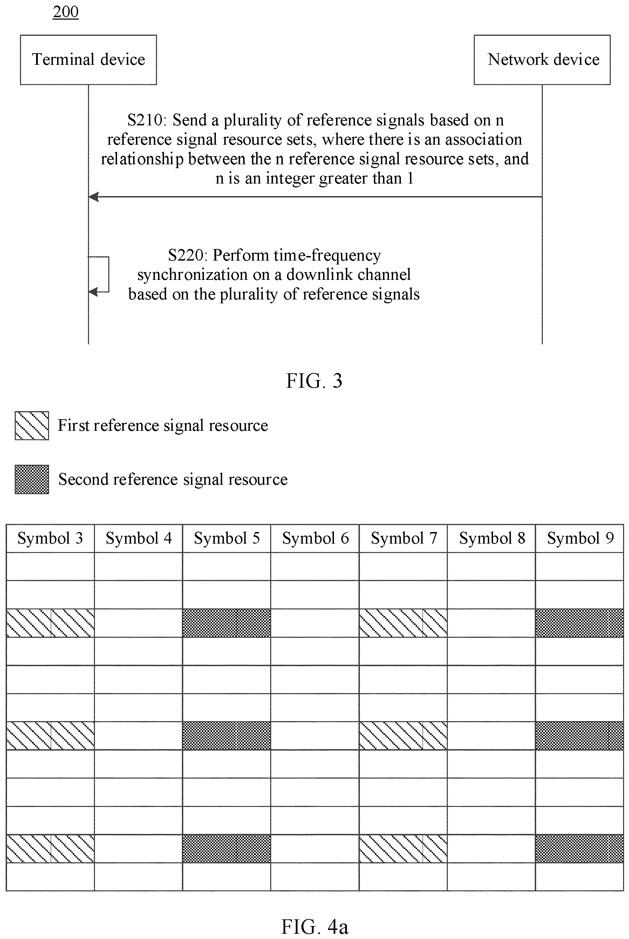

FIG. 3 is a schematic flowchart of a time-frequency synchronization method 200 according to an embodiment of this application. As shown in FIG. 3, the method 200 may include S210 and S220. The following describes steps in the method 200.

S210: A network device sends a plurality of reference signals to a terminal device based on n reference signal resource sets, where there is an association relationship between the n reference signal resource sets, and n is an integer greater than 1.

Correspondingly, the terminal device receives the plurality of reference signals from the network device based on the n reference signal resource sets.

S220: The terminal device performs time-frequency synchronization on a downlink channel based on the plurality of reference signals.

It should be noted that reference signal resources in the n reference signal resource sets are used to carry the plurality of reference signals. In other words, the network device sends the plurality of reference signals to the terminal device by using the reference signal resources in the n reference signal resource sets. In other words, the terminal device receives, on the reference signal resources in the n reference signal resource sets, the plurality of reference signals sent by the terminal device.

Optionally, the reference signal may be any reference signal used for time-frequency synchronization. For example, the reference signal may be a TRS. As described above, the TRS may be an independent reference signal, or may be one type of CSI-RS.

It may be understood that the network device sends the plurality of reference signals to the terminal device based on the n reference signal resource sets in one time-frequency synchronization process (in other words, in one time-frequency synchronization period) of the terminal device, so that the terminal device performs time-frequency synchronization based on the plurality of reference signals. Compared with sending a reference signal to the terminal device based on one reference signal resource set in one time-frequency synchronization period, time-domain density and/or frequency-domain density of a reference signal resource in one time-frequency synchronization period are/is higher.

Optionally, the n reference signal resource sets may belong to one time unit in one time-frequency synchronization period, and the time unit may be, for example, a slot (slot), a subframe (sub frame), a symbol (symbol), or another time unit defined in the future. In this embodiment of this application, an example in which the time unit is the slot is used for description.

It may be understood that, to enable the terminal device to receive, based on the reference signal resources in the n reference signal resource sets, the plurality of reference signals sent by the network device, there should be the association relationship between the n reference signal resource sets.

The association relationship between the n reference signal resource sets may include but is not limited to the following two possible examples:

Example 1: The plurality of reference signals carried in the n reference signal resource sets come from a same antenna port of the network device, in other words, the network device sends the plurality of reference signals by using the same antenna port.
Example 2: The n reference signal resource sets are in a same time unit, and reference signal resources in different reference signal resource sets are in different time subunits of the time unit.

In the Example 2, the time unit may be a slot, the time subunit may be a symbol, and different reference signal resource sets may be in different symbols in a same slot. Alternatively, the time unit may be a subframe, the time subunit may be a slot or a symbol, and different reference signal resource sets may be in different slots of a same subframe or in different symbols of a same subframe. In summary, the reference signal resource sets may be at different time domain locations in a same time unit.

In the Example 2, frequency domain locations of reference resources in different reference signal resource sets in a same time unit may be the same or different. This is not limited in this embodiment of this application.

For example, as shown in FIG. 4a, the n reference signal resource sets include a first reference signal resource set and a second reference signal resource set. The first reference signal resource set includes two first reference signal resources, and the two first reference signal resources respectively occupy a symbol 3 and a symbol 7 in one slot. The second reference signal resource set includes two second reference signal resources, and the two second reference signal resources respectively occupy a symbol 5 and a symbol 9 in the slot. In addition, each first reference signal resource in the first reference signal resource set has a second reference signal resource with a same frequency domain location in the second reference signal resource set.

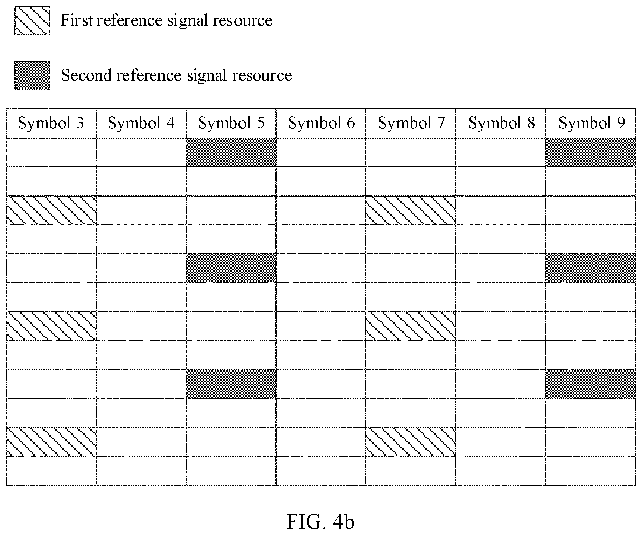

For another example, as shown in FIG. 4b, two first reference signal resources in a first reference signal resource set respectively occupy a symbol 3 and a symbol 7 in one slot, and two second reference signal resources in a second reference signal resource set respectively occupy a symbol 5 and a symbol 9 in the slot. In addition, any first reference signal resource in the first reference signal resource set does not have a second reference signal resource with a same frequency domain location in the second reference signal resource set.

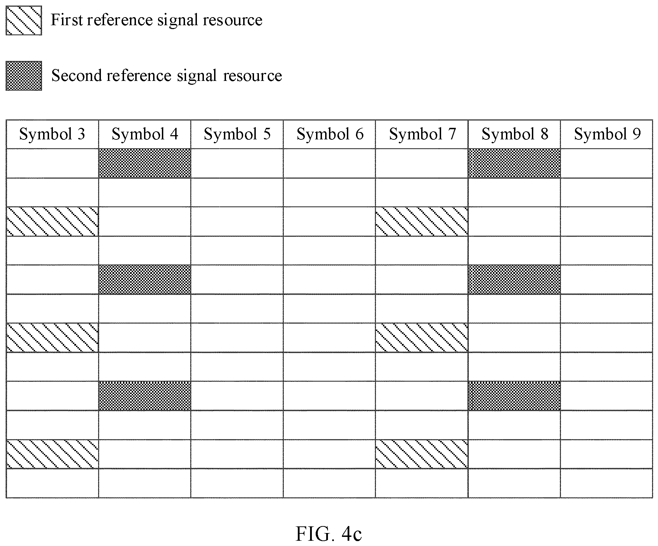

For still another example, as shown in FIG. 4c, two first reference signal resources in a first reference signal resource set respectively occupy a symbol 3 and a symbol 7 in one slot, and two second reference signal resources in a second reference signal resource set respectively occupy a symbol 4 and a symbol 8 in the slot. In addition, any first reference signal resource in the first reference signal resource set does not have a second reference signal resource with a same frequency domain location in the second reference signal resource set.

In FIG. 4b and FIG. 4c, each reference signal resource may occupy one subcarrier in frequency domain. Any first reference signal resource in the first reference signal resource set does not have a second reference signal resource with a same frequency domain location in the second reference signal resource set. In other words, a reference signal resource in the first reference signal resource set and a reference signal resource in the second reference signal resource set may exist on a same subcarrier. Any first reference signal resource in the first reference signal resource set does not have a second reference signal resource with a same frequency domain location in the second reference signal resource set. In other words, only a reference signal in the first reference signal resource set or a reference signal in the second reference signal resource set exists on a same subcarrier.

A reference signal pattern (for example, a TRS pattern (pattern)) formed by the n reference signal resource sets in a same time unit may be any pattern in FIG. 4a to FIG. 4c. The TRS pattern may be evenly distributed in time domain, in other words, time domain intervals are the same. For example, in FIG. 4a and FIG. 4b, reference signal resources occupy the symbol 3, the symbol 5, the symbol 7, and the symbol 9, and a quantity of interval symbols is one. Alternatively, the TRS pattern may be non-uniformly distributed in time domain, in other words, time domain intervals are different. For example, in FIG. 4c, reference signal resources occupy the symbol 3, the symbol 4, the symbol 7, and the symbol 8. There is no interval symbol between the symbol 3 and the symbol 4, there is no interval symbol between the symbol 7 and the symbol 8, and a quantity of interval symbols between the symbol 4 and the symbol 7 is 2.

Optionally, time domain intervals between reference signal resources in the reference signal resource sets may be the same. For example, in FIG. 4a to FIG. 4c, a time domain interval between the two reference signal resources in the first reference signal resource set is four symbols. A time domain interval between the two reference signal resources in the second reference signal resource set is also four symbols. Bandwidth of reference signal resources in the reference signal resource sets may be the same. The reference signal resource sets may have a same QCL relationship.

Refer to FIG. 4a and FIG. 4b. A time domain interval D of a reference signal pattern including the n reference signal resource sets is equal to 2. Compared with a quantity of interval symbols D=4 in FIG. 2, a correctable time-frequency offset range is doubled, and a scenario in which the terminal device moves at a high speed (for example, a terminal device in an HST moving with the HST) can be met.

In the foregoing Example 2, description is provided merely by using an example in which the n reference signal resource sets are located at different time domain locations of a same time unit. It may be understood that reference signal resources in different reference signal resource sets may alternatively have a same time domain location but different frequency domain locations in the same time unit.

In some embodiments, it is assumed that reference signal resources in different reference signal resource sets have different frequency domain locations in the time unit. The terminal device needs to perform signal processing on the plurality of received reference signals, and perform time-frequency synchronization on the downlink channel based on the processed reference signals.

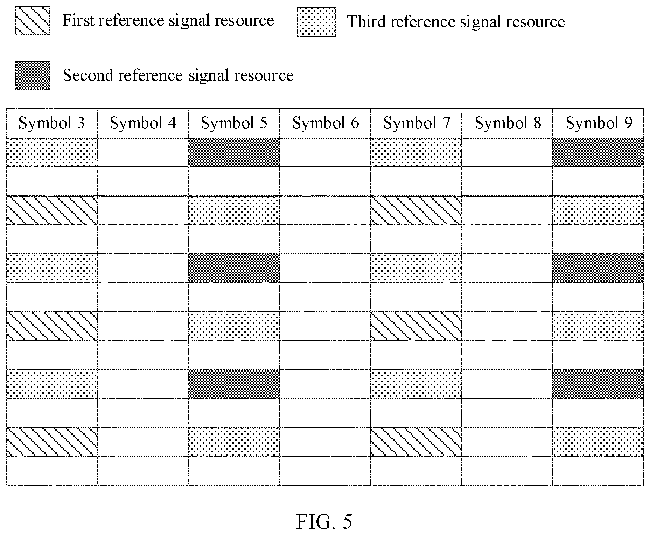

For example, the terminal device may interpolate the plurality of reference signals, and perform time-frequency synchronization on the downlink channel based on a plurality of interpolated reference signals. For example, the reference signals in FIG. 4b are interpolated, to obtain the reference signal pattern shown in FIG. 5, and third reference signal resources shown in FIG. 5 are reference signal resources obtained through interpolation. Reference signals transmitted between the network device and the terminal device at the resource locations of the first reference signal resources and the second reference signal resources that are shown in FIG. 5 may be considered as reference signals received on the first reference signal resources, the second reference signal resources, and the third reference signal resources.

Optionally, the downlink channel in S220 is a downlink channel sent by the network device to the terminal device. In other words, the network device sends downlink information to the terminal device through the downlink channel. For example, the downlink channel may be a PDCCH and/or a PDSCH. The network device may send the downlink channel to the terminal device after sending the plurality of reference signals to the terminal device, or the network device may simultaneously send the plurality of reference signals and the downlink channel to the terminal device. This is not limited in this application.

In this embodiment of this application, the terminal device may perform time-frequency synchronization on the downlink channel based on the plurality of reference signals received from the n reference signal resource sets, so that time-domain density or frequency-domain density of a reference signal received by the terminal device in one time-frequency synchronization period is higher, thereby increasing a time-frequency offset correction range.

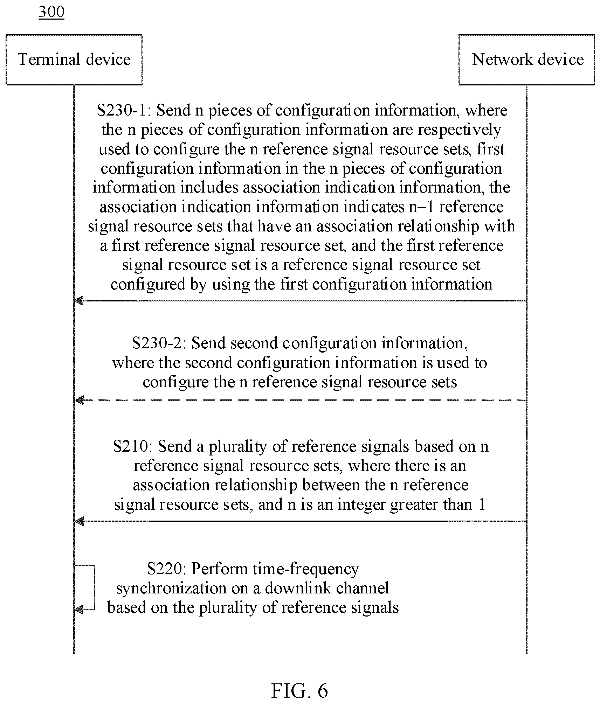

FIG. 6 is a schematic flowchart of a time-frequency synchronization method 300 according to an embodiment of this application. As shown in FIG. 6, based on the method 200 shown in FIG. 3, the method 300 may further include S230-1 and S230-2. S210 and S220 in FIG. 6 have been described in the foregoing embodiment, and details are not described herein again.

S230-1: The network device sends n pieces of configuration information to the terminal device.

The n pieces of configuration information are respectively used to configure n reference signal resource sets, first configuration information in the n pieces of configuration information includes association indication information, and the association indication information indicates a reference signal resource set that has an association relationship with a first reference signal resource set. The first reference signal resource set is a reference signal resource set configured by using the first configuration information.

Accordingly, the terminal device receives the n pieces of configuration information from the network device.

S230-2: The network device sends second configuration information to the terminal device, where the second configuration information is used to configure the n reference signal resource sets.

Accordingly, the terminal device receives the second configuration information from the network device.

In the method 300, either S230-1 or S230-2 is performed, and S230-2 is marked with a dashed line.

For S230-1, it should be noted that the n pieces of configuration information are in a one-to-one correspondence with the n reference signal resource sets. Each piece of configuration information may indicate one reference signal resource set. The first configuration information is any one of the n pieces of configuration information, a reference signal resource set indicated by the first configuration information is the first reference signal resource set, and the first reference signal resource set may be any one of the n reference signal resource sets.

It should be noted that the association indication information in the first configuration information may indicate m reference signal resource sets in the n reference signal resource sets that have an association relationship with the first reference signal resource set, and m may be an integer greater than or equal to 1 and less than n.

For example, the network device may indicate, in configuration signaling of any one of two reference signal resource sets, an identifier (ID) of a reference signal resource set that has a same antenna port as the reference signal resource set. For example, the network device needs to configure a first reference signal resource set and a second reference signal resource set. In configuration signaling of the second reference signal resource set, the network device may use same-Port-nzp-CSI-ResourceSetId to indicate an ID of the first reference signal resource set, indicating that reference signals in the two reference signal resource sets use a same antenna port. In this case, the configuration signaling of the second reference signal resource set is the first configuration information.

```
NZP-CSI-RS-ResourceSet ::=              SEQUENCE {

nzp-CSI-ResourceSetId                   NZP-CSI-RS-ResourceSetId,

nzp-CSI-RS-Resources                                        SEQUENCE (SIZE

(1..maxNrofNZP-CSI-RS-ResourcesPerSet)) OF NZP-CSI-RS-ResourceId,

repetition                              ENUMERATED { on, off }

aperiodicTriggeringOffset               INTEGER(0..6)

trs-Info                                ENUMERATED {true},

same-Port-nzp-CSI-ResourceSetId    NZP-CSI-RS-ResourceSetId

}
```

Optionally, the n pieces of configuration information may include one or more pieces of first configuration information.

Optionally, the n pieces of configuration information may be sent by the network device by using a same antenna port.

In S230-1, the network device separately configures the n reference signal resource sets by using the n pieces of configuration information, and indicates an association relationship between the n reference signal resource sets by using at least one piece of first configuration information in the n pieces of configuration information, so that the terminal device can accurately receive the plurality of reference signals transmitted on the n reference signal resource sets that have the association relationship.

For S230-2, it should be noted that the network device may configure the n reference signal resource sets for the terminal device by using one piece of configuration information (for example, the second configuration information). The second configuration information may be understood as enhanced reference signal resource set configuration signaling, for example, TRS-Enh-ResourceSet. The enhanced reference signal resource set configuration signaling includes n pieces of reference signal resource set configuration signaling in the conventional technology, for example, the following signaling:

```
TRS-ENh-ResourceSet {

Nzp-CSI-ResourceSet1     NZP-CSI-RS-ResourceSetId,

Nzp-CSI-ResourceSet2     NZP-CSI-RS-ResourceSetId,

...

Nzp-CSI-ResourceSetn     NZP-CSI-RS-ResourceSetId

}
```

In S230-2, the network device may configure the n reference signal resource sets by using one piece of configuration information, thereby reducing signaling overheads.

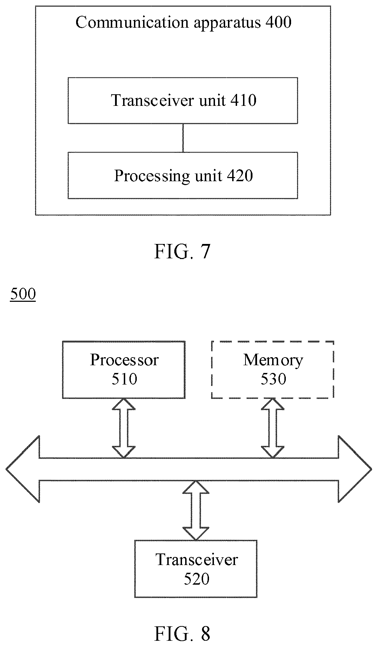

The foregoing describes in detail the methods provided in embodiments of this application with reference to FIG. 3 to FIG. 6. Apparatuses provided in embodiments of this application are described below in detail with reference to FIG. 7 and FIG. 8.

FIG. 7 is a schematic diagram of a structure of a communication apparatus 400 according to an embodiment of this application. As shown in FIG. 7, the communication apparatus 400 may include a transceiver unit 410 and a processing unit 420.

Optionally, the communication apparatus 400 may be used in the terminal device in the foregoing method embodiments, for example, may be a terminal device, or a component (for example, a chip or a chip system) disposed in the terminal device.

When the communication apparatus 400 is used in the terminal device, the transceiver unit 410 may be configured to receive a plurality of reference signals from a network device based on n reference signal resource sets. There is an association relationship between the n reference signal resource sets, and n is an integer greater than 1. The processing unit 420 may be configured to perform time-frequency synchronization on a downlink channel based on the plurality of reference signals.

In some embodiments, the n reference signal resource sets are in a same time unit, and reference signal resources in different reference signal resource sets are in different symbols in the time unit.

In some embodiments, the plurality of reference signals come from a same antenna port of the network device.

In some embodiments, the transceiver unit 410 is further configured to receive n pieces of configuration information from the network device. The n pieces of configuration information are respectively used to configure the n reference signal resource sets, first configuration information in the n pieces of configuration information includes association indication information, and the association indication information indicates n-1 reference signal resource sets that have an association relationship with a first reference signal resource set. The first reference signal resource set is a reference signal resource set configured by using the first configuration information.

In some embodiments, the transceiver unit 410 is further configured to receive second configuration information from the network device. The second configuration information is used to configure the n reference signal resource sets.

In some embodiments, reference signal resources in different reference signal resource sets have a same frequency domain location in the time unit.

In some embodiments, reference signal resources in different reference signal resource sets have different frequency domain locations in the time unit.

In some embodiments, the processing unit 420 is specifically configured to: interpolate the plurality of reference signals; and perform time-frequency synchronization on the downlink channel based on a plurality of interpolated reference signals.

It should be understood that a specific process in which the units perform the foregoing corresponding steps is described in detail in the foregoing method embodiments, and for brevity, details are not described herein.

When the communication apparatus 400 is the terminal device, the processing unit 420 in the communication apparatus 400 may be implemented by using a processor, for example, may correspond to a processor 510 in a communication apparatus 500 shown in FIG. 8. The transceiver unit 410 may be implemented by using a transceiver, for example, may correspond to a transceiver 520 in the communication apparatus 500 shown in FIG. 8.

When the communication apparatus 400 is the chip or the chip system disposed in the terminal device, both the processing unit 420 and the transceiver unit 410 in the communication apparatus 400 may be implemented by using an input/output interface, a circuit, or the like.

Optionally, the communication apparatus 400 may be used in the network device in the foregoing method embodiments, for example, may be a network device, or a component (for example, a chip or a chip system) disposed in the network device.

When the communication apparatus 400 is used in the network device, the processing unit 420 may be configured to determine n reference signal resource sets. There is an association relationship between the n reference signal resource sets, and n is an integer greater than 1. The transceiver unit 410 may be configured to send a plurality of reference signals to a terminal device based on the n reference signal resource sets.

In some embodiments, the n reference signal resource sets are in a same time unit, and reference signal resources in different reference signal resource sets are in different symbols in the time unit.

In some embodiments, the plurality of reference signals come from a same antenna port of the network device.

In some embodiments, the transceiver unit 410 is further configured to send n pieces of configuration information to the terminal device. The n pieces of configuration information are respectively used to configure the n reference signal resource sets, first configuration information in the n pieces of configuration information includes association indication information, and the association indication information indicates n-1 reference signal resource sets that have an association relationship with a first reference signal resource set. The first reference signal resource set is a reference signal resource set configured by using the first configuration information.

In some embodiments, the transceiver unit 410 is further configured to send second configuration information to the terminal device. The second configuration information is used to configure the n reference signal resource sets.

In some embodiments, reference signal resources in different reference signal resource sets have a same frequency domain location in the time unit.

In some embodiments, reference signal resources in different reference signal resource sets have different frequency domain locations in the time unit.

It should be understood that a specific process in which the units perform the foregoing corresponding steps is described in detail in the foregoing method embodiments, and for brevity, details are not described herein.

When the communication apparatus 400 is the network device, the processing unit 420 in the communication apparatus 400 may be implemented by using a processor, for example, may correspond to a processor 510 in a communication apparatus 500 shown in FIG. 8. The transceiver unit 410 may be implemented by using a transceiver, for example, may correspond to a transceiver 520 in the communication apparatus 500 shown in FIG. 8.

When the communication apparatus 400 is the chip or the chip system disposed in the network device, both the processing unit 420 and the transceiver unit 410 in the communication apparatus 400 may be implemented by using an input/output interface, a circuit, or the like.

FIG. 8 is another schematic block diagram of a communication apparatus 500 according to an embodiment of this application. As shown in FIG. 8, the apparatus 500 may include a processor 510, a transceiver 520, and a memory 530. The processor 510, the transceiver 520, and the memory 530 communicate with each other by using an internal connection path. The memory 530 is configured to store instructions. The processor 510 is configured to execute the instructions stored in the memory 530, to control the transceiver 520 to send a signal and/or receive a signal.

It should be understood that the communication apparatus 500 may correspond to the terminal device in the foregoing method embodiments, and may be configured to perform steps and/or procedures performed by the terminal device in the foregoing method embodiments. Optionally, the memory 530 may include a read-only memory and a random access memory, and provide instructions and data to the processor. A part of the memory may further include a nonvolatile random access memory. The memory 530 may be an independent component, or may be integrated into the processor 510. The processor 510 may be configured to execute the instructions stored in the memory 530. In addition, when the processor 510 executes the instructions stored in the memory, the processor 510 is configured to perform the steps and/or the procedures corresponding to the terminal device in the foregoing method embodiments.

Optionally, the communication apparatus 500 is the terminal device in the foregoing embodiments.

The transceiver 520 may include a transmitter and a receiver. The transceiver 520 may further include an antenna. There may be one or more antennas. The processor 510, the memory 530, and the transceiver 520 may be devices integrated in different chips. For example, the processor 510 and the memory 530 may be integrated in a baseband chip, while the transceiver 520 may be integrated in a radio frequency chip. The processor 510, the memory 530, and the transceiver 520 may alternatively be devices integrated in a same chip. This is not limited in this application.

Optionally, the communication apparatus 500 is a component disposed in the terminal device, for example, a chip or a chip system.

The transceiver 520 may alternatively be a communication interface, for example, an input/output interface or a circuit. The transceiver 520, the processor 510, and the memory 530 may all be integrated in a same chip, for example, integrated in a baseband chip.

This application further provides a processing apparatus, including at least one processor. The at least one processor is configured to execute a computer program stored in a memory, to enable the processing apparatus to perform the method performed by the terminal device or the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, to enable the processing apparatus to perform the method performed by the terminal device or the network device in the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the terminal device or the network device in the foregoing method embodiments.

It should be understood that the processing apparatus may be one or more chips. For example, the processing apparatus may be a field programmable gate array (field programmable gate array, FPGA), an application specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It may be understood that the memory in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory

**EP 4 404 518 A1**

(random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the methods performed by the terminal device or the network device in the foregoing method embodiments.

According to the method provided in embodiments of this application, this application further provides a computer-readable storage medium. The computer-readable storage medium stores program code. When the program code is run on a computer, the computer is enabled to perform the methods performed by the terminal device or the network device in the foregoing method embodiments.

According to the method provided in embodiments of this application, this application further provides a communication system. The communication system may include the terminal device or the network device.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A time-frequency synchronization method, comprising:

   receiving, by a terminal device, a plurality of reference signals from a network device based on n reference signal resource sets, wherein there is an association relationship between the n reference signal resource sets, and n is an integer greater than 1; and
   performing, by the terminal device, time-frequency synchronization on a downlink channel based on the plurality of reference signals.

2.   The method according to claim 1, wherein the n reference signal resource sets are in a same time unit, and reference signal resources in different reference signal resource sets are in different symbols in the time unit.

3.   The method according to claim 1 or 2, wherein the plurality of reference signals come from a same antenna port of the network device.

4.   The method according to any one of claims 1 to 3, wherein the method further comprises:

   receiving, by the terminal device, n pieces of configuration information from the network device, wherein
   the n pieces of configuration information are respectively used to configure the n reference signal resource sets, first configuration information in the n pieces of configuration information comprises association indication information, the association indication information indicates n-1 reference signal resource sets that have an association relationship with a first reference signal resource set, and the first reference signal resource set is a reference signal resource set configured by using the first configuration information.

5. The method according to any one of claims 1 to 3, wherein the method further comprises:
receiving, by the terminal device, second configuration information from the network device, wherein the second configuration information is used to configure the n reference signal resource sets.

6. The method according to any one of claims 1 to 5, wherein reference signal resources in different reference signal resource sets have a same frequency domain location in a same time unit.

7. The method according to any one of claims 1 to 5, wherein reference signal resources in different reference signal resource sets have different frequency domain locations in a same time unit.

8. The method according to claim 7, wherein the performing, by the terminal device, time-frequency synchronization on a downlink channel based on the plurality of reference signals comprises:

interpolating, by the terminal device, the plurality of reference signals; and
performing, by the terminal device, time-frequency synchronization on the downlink channel based on a plurality of interpolated reference signals.

9. A time-frequency synchronization method, comprising:
sending, by a network device, a plurality of reference signals to a terminal device based on n reference signal resource sets, wherein there is an association relationship between the n reference signal resource sets, and n is an integer greater than 1.

10. The method according to claim 9, wherein the n reference signal resource sets are in a same time unit, and reference signal resources in different reference signal resource sets are in different symbols in the time unit.

11. The method according to claim 9 or 10, wherein the plurality of reference signals come from a same antenna port of the network device.

12. The method according to any one of claims 9 to 11, wherein the method further comprises:

sending, by the network device, n pieces of configuration information to the terminal device, wherein
the n pieces of configuration information are respectively used to configure the n reference signal resource sets, first configuration information in the n pieces of configuration information comprises association indication information, the association indication information indicates n-1 reference signal resource sets that have an association relationship with a first reference signal resource set, and the first reference signal resource set is a reference signal resource set configured by using the first configuration information.

13. The method according to any one of claims 9 to 11, wherein the method further comprises:
sending, by the network device, second configuration information to the terminal device, wherein the second configuration information is used to configure the n reference signal resource sets.

14. The method according to any one of claims 9 to 13, wherein reference signal resources in different reference signal resource sets have a same frequency domain location in a same time unit.

15. The method according to any one of claims 9 to 13, wherein reference signal resources in different reference signal resource sets have different frequency domain locations in a same time unit.

16. A communication apparatus, comprising:

a transceiver unit, configured to receive a plurality of reference signals from a network device based on n reference signal resource sets, wherein there is an association relationship between the n reference signal resource sets, and n is an integer greater than 1; and
a processing unit, configured to perform time-frequency synchronization on a downlink channel based on the plurality of reference signals.

17. The apparatus according to claim 16, wherein the n reference signal resource sets are in a same time unit, and reference signal resources in different reference signal resource sets are in different symbols in the time unit.

18. The apparatus according to claim 16 or 17, wherein the plurality of reference signals come from a same antenna port of the network device.

19. The apparatus according to any one of claims 16 to 18, wherein the transceiver unit is further configured to:

receive n pieces of configuration information from the network device, wherein
the n pieces of configuration information are respectively used to configure the n reference signal resource sets, first configuration information in the n pieces of configuration information comprises association indication information, the association indication information indicates n-1 reference signal resource sets that have an association relationship with a first reference signal resource set, and the first reference signal resource set is a reference signal resource set configured by using the first configuration information.

20. The apparatus according to any one of claims 16 to 18, wherein the transceiver unit is further configured to:
receive second configuration information from the network device, wherein the second configuration information is used to configure the n reference signal resource sets.

21. The apparatus according to any one of claims 16 to 20, wherein reference signal resources in different reference signal resource sets have a same frequency domain location in a same time unit.

22. The apparatus according to any one of claims 16 to 20, wherein reference signal resources in different reference signal resource sets have different frequency domain locations in a same time unit.

23. The apparatus according to claim 22, wherein the processing unit is specifically configured to:

interpolate the plurality of reference signals; and
perform time-frequency synchronization on the downlink channel based on a plurality of interpolated reference signals.

24. A communication apparatus, comprising

a processing unit, configured to determine n reference signal resource sets, wherein there is an association relationship between the n reference signal resource sets, and n is an integer greater than 1; and
a transceiver unit, configured to send a plurality of reference signals to a terminal device based on the n reference signal resource sets.

25. The apparatus according to claim 24, wherein the n reference signal resource sets are in a same time unit, and reference signal resources in different reference signal resource sets are in different symbols in the time unit.

26. The apparatus according to claim 24 or 25, wherein the plurality of reference signals come from a same antenna port of the communication apparatus.

27. The apparatus according to any one of claims 24 to 26, wherein the transceiver unit is further configured to:

send n pieces of configuration information to the terminal device, wherein
the n pieces of configuration information are respectively used to configure the n reference signal resource sets, first configuration information in the n pieces of configuration information comprises association indication information, the association indication information indicates n-1 reference signal resource sets that have an association relationship with a first reference signal resource set, and the first reference signal resource set is a reference signal resource set configured by using the first configuration information.

28. The apparatus according to any one of claims 24 to 26, wherein the transceiver unit is further configured to:
send second configuration information to the terminal device, wherein the second configuration information is used to configure the n reference signal resource sets.

29. The apparatus according to any one of claims 24 to 28, wherein reference signal resources in different reference signal resource sets have a same frequency domain location in a same time unit.

30. The apparatus according to any one of claims 24 to 28, wherein reference signal resources in different reference signal resource sets have different frequency domain locations in a same time unit.

31. A communication apparatus, comprising a processor and a memory, wherein the memory is configured to store a computer program, and the processor is configured to invoke and run the computer program stored in the memory, to perform the method according to any one of claims 1 to 15.

32. A chip, comprising a processor, configured to invoke computer instructions from a memory and run the computer instructions, so that a device on which the chip is installed performs the method according to any one of claims 1 to 15.

33. A computer-readable storage medium, configured to store computer program instructions, wherein the computer program enables a computer to perform the method according to any one of claims 1 to 15.

34. A computer program product, comprising computer program instructions, wherein the computer program instructions enable a computer to perform the method according to any one of claims 1 to 15.

FIG. 1

FIG. 2

200

| Terminal device | | Network device |

S210: Send a plurality of reference signals based on n reference signal resource sets, where there is an association relationship between the n reference signal resource sets, and n is an integer greater than 1

S220: Perform time-frequency synchronization on a downlink channel based on the plurality of reference signals

FIG. 3

First reference signal resource

Second reference signal resource

| Symbol 3 | Symbol 4 | Symbol 5 | Symbol 6 | Symbol 7 | Symbol 8 | Symbol 9 |
|---|---|---|---|---|---|---|
| | | | | | | |
| | | | | | | |
| First | | Second | | First | | Second |
| | | | | | | |
| | | | | | | |
| | | | | | | |
| First | | Second | | First | | Second |
| | | | | | | |
| | | | | | | |
| | | | | | | |
| First | | Second | | First | | Second |
| | | | | | | |

FIG. 4a

First reference signal resource

Second reference signal resource

| Symbol 3 | Symbol 4 | Symbol 5 | Symbol 6 | Symbol 7 | Symbol 8 | Symbol 9 |
|----------|----------|----------|----------|----------|----------|----------|
| | | Second | | | | Second |
| | | | | | | |
| First | | | | First | | |
| | | | | | | |
| | | Second | | | | Second |
| | | | | | | |
| First | | | | First | | |
| | | | | | | |
| | | Second | | | | Second |
| | | | | | | |
| First | | | | First | | |
| | | | | | | |

FIG. 4b

First reference signal resource

Second reference signal resource

| Symbol 3 | Symbol 4 | Symbol 5 | Symbol 6 | Symbol 7 | Symbol 8 | Symbol 9 |
|---|---|---|---|---|---|---|
|  | Second |  |  |  | Second |  |
|  |  |  |  |  |  |  |
| First |  |  |  | First |  |  |
|  |  |  |  |  |  |  |
|  | Second |  |  |  | Second |  |
|  |  |  |  |  |  |  |
| First |  |  |  | First |  |  |
|  |  |  |  |  |  |  |
|  | Second |  |  |  | Second |  |
|  |  |  |  |  |  |  |
| First |  |  |  | First |  |  |
|  |  |  |  |  |  |  |

FIG. 4c

First reference signal resource      Third reference signal resource

Second reference signal resource

| Symbol 3 | Symbol 4 | Symbol 5 | Symbol 6 | Symbol 7 | Symbol 8 | Symbol 9 |
|---|---|---|---|---|---|---|
| Third | | Second | | Third | | Second |
| | | | | | | |
| First | | Third | | First | | Third |
| | | | | | | |
| Third | | Second | | Third | | Second |
| | | | | | | |
| First | | Third | | First | | Third |
| | | | | | | |
| Third | | Second | | Third | | Second |
| | | | | | | |
| First | | Third | | First | | Third |
| | | | | | | |

FIG. 5

300

```
┌─────────────────────┐                                    ┌─────────────────────┐
│   Terminal device   │                                    │   Network device    │
└─────────────────────┘                                    └─────────────────────┘
```

S230-1: Send n pieces of configuration information, where the n pieces of configuration information are respectively used to configure the n reference signal resource sets, first configuration information in the n pieces of configuration information includes association indication information, the association indication information indicates n−1 reference signal resource sets that have an association relationship with a first reference signal resource set, and the first reference signal resource set is a reference signal resource set configured by using the first configuration information

S230-2: Send second configuration information, where the second configuration information is used to configure the n reference signal resource sets

S210: Send a plurality of reference signals based on n reference signal resource sets, where there is an association relationship between the n reference signal resource sets, and n is an integer greater than 1

S220: Perform time-frequency synchronization on a downlink channel based on the plurality of reference signals

FIG. 6

Communication apparatus 400

Transceiver unit 410

Processing unit 420

FIG. 7

500

Processor
510

Memory
530

Transceiver
520

FIG. 8

<table>
<tr><td colspan="3" align="center">INTERNATIONAL SEARCH REPORT</td><td>International application No.<br>**PCT/CN2022/120017**</td></tr>
</table>

**A.    CLASSIFICATION OF SUBJECT MATTER**

H04L 27/26(2006.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; VEN; EPTXT; CNKI; 3GPP: 多, 两, 第二, 参考信号, 集, 时间, 频率, 频域, 时域, 定时, 时频, 同步, 关联, 相关; multiple, two, second, reference signal, RS, TRS, set, time, frequency, synchronize, relate

**C.    DOCUMENTS CONSIDERED TO BE RELEVANT**

| Category* | Citation of document, with indication, where appropriate, of the relevant passages | Relevant to claim No. |
|---|---|---|
| X | CN 113271662 A (SPREADTRUM COMMUNICATIONS SHANGHAI INC.) 17 August 2021 (2021-08-17)<br>description, paragraphs [0002] and [0064]-[0122] | 1-34 |
| A | CN 111316592 A (TELEFONAKTIEBOLAGET LM ERICSSON (PUBL)) 19 June 2020 (2020-06-19)<br>entire document | 1-34 |
| A | CN 111373665 A (CONVIDA WIRELESS LLC) 03 July 2020 (2020-07-03)<br>entire document | 1-34 |
| A | WO 2021012184 A1 (NEC CORP. et al.) 28 January 2021 (2021-01-28)<br>entire document | 1-34 |

☐ Further documents are listed in the continuation of Box C.      ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/120017**

| Patent document cited in search report | | | Publication date (day/month/year) | Patent family member(s) | | | Publication date (day/month/year) |
|---|---|---|---|---|---|---|---|
| CN | 113271662 | A | 17 August 2021 | None | | | |
| CN | 111316592 | A | 19 June 2020 | EP | 3529946 | A1 | 28 August 2019 |
| | | | | ES | 2816156 | T3 | 31 March 2021 |
| | | | | CN | 113347718 | A | 03 September 2021 |
| | | | | KR | 20200071774 | A | 19 June 2020 |
| | | | | HU | E050499 | T2 | 28 December 2020 |
| | | | | EP | 3764582 | A1 | 13 January 2021 |
| | | | | US | 2022038237 | A1 | 03 February 2022 |
| | | | | US | 2021273761 | A1 | 02 September 2021 |
| | | | | KR | 20200128203 | A | 11 November 2020 |
| | | | | US | 2019158243 | A1 | 23 May 2019 |
| | | | | WO | 2019098930 | A1 | 23 May 2019 |
| | | | | DK | 3529946 | T3 | 10 August 2020 |
| | | | | PL | 3529946 | T3 | 16 November 2020 |
| | | | | JP | 2021503735 | A | 12 February 2021 |
| CN | 111373665 | A | 03 July 2020 | EP | 3685514 | A1 | 29 July 2020 |
| | | | | WO | 2019067925 | A1 | 04 April 2019 |
| | | | | US | 2020287678 | A1 | 10 September 2020 |
| WO | 2021012184 | A1 | 28 January 2021 | US | 2022264478 | A1 | 18 August 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111148984